# EUROPÄISCHE PATENTSCHRIFT

(11) **EP 3 646 981 B1**
(45) Veröffentlichungstag und Bekanntmachung des Hinweises auf die Patenterteilung: **25.03.2026**
(21) Anmeldenummer: 19203255.5
(22) Anmeldetag: 15.10.2019
(51) Int. Cl.: B23K 11/31

(54) **SCHWEISSELEKTRODE**
WELDING ELECTRODE
ÉLECTRODE DE SOUDAGE

(30) Priorität: 16.10.2018 DE 102018125690
(43) Veröffentlichungstag der Anmeldung: 06.05.2020
(73) Patentinhaber: Doceram GmbH, 44309 Dortmund (DE)
(72) Erfinder: Stuba, Tobias Lars, 45663 Recklinghausen (DE)
(74) Vertreter: Rätsch, Caroline

(56) Entgegenhaltungen:
- EP-A1- 1 350 589
- DE-U1- 202012 006 321
- JP-A- H07 100 660
- JP-A- H10 328 851
- US-A- 6 008 463

## Beschreibung

Die Erfindung betrifft eine Schweißelektrode, mit einem Gehäuse, einer in dem Gehäuse angeordneten Kolbenstange, die in Achsrichtung in dem Gehäuse längsverschieblich gelagert ist, und mit einer Unterelektrode, die sich an dem Gehäuse abstützt (siehe z.B. US 6 008 463 A, welche den Oberbegriff des Anspruchs 1 offenbart).

Schweißelektroden sind aus dem Stand der Technik bekannt. Sie dienen dazu, metallische Gegenstände auf einem Bauteil, beispielsweise einem Blech, zu verschweißen. Bei den metallischen Gegenständen kann es sich beispielsweise um eine Buckelmutter oder einen Bolzen handeln.

Bei Buckelmuttern kommt ein Zentrierstift zum Einsatz. Durch Bewegung der Kolbenstange kann der Zentrierstift aus dem Gehäuse hinaus- und in das Gehäuse hineinbewegt werden. Der Zentrierstift dient zur Zentrierung des Bleches. Hierbei greift der Zentrierstift durch eine Öffnung des Bleches hindurch, wobei das Blech auf der Unterelektrode aufliegt. Auf der endseitigen Spitze des Zentrierstiftes wird die Buckelmutter aufgesetzt. Eine Oberelektrode drückt die Buckelmutter in Richtung auf das Blech. Dabei wird eine elektrische Verbindung zwischen der Oberelektrode, der Buckelmutter, dem Blech und der Unterelektrode hergestellt. Aufgrund des Spannungsabfalls zwischen der Buckelmutter und dem Blech entsteht eine starke Wärmeentwicklung, die das Verschweißen der Buckelmutter mit dem Blech bewirkt.

Bei dem Einsatz von Zentrierstiften werden zwei Varianten unterschieden. Bei der ersten Variante ist der Zentrierstift in dem Gehäuse gegen die Kraft einer Feder verschieblich gelagert. Das Blech wird meist von oben auf den Zentrierstift aufgesetzt und dadurch zentriert. Anschließend drückt die Oberelektrode die zuvor auf den Zentrierstift aufgesetzte Buckelmutter gegen die Federkraft auf das Blech. Sobald die Verschweißung erfolgt ist, bewegt sich die Oberelektrode wieder nach oben und das Blech kann zusammen mit der aufgeschweißten Mutter von dem Zentrierstift abgenommen werden.

Bei der zweiten Variante ist der Zentrierstift über den eingangs genannten Kolbenstangenaufsatz mit der Kolbenstange verbunden. Die Kolbenstange wird pneumatisch betätigt. Eine derartige Schweißelektrode ist aus der DE 20 2012 006 321 U1 bekannt. Durch die pneumatische Betätigung der Kolbenstange kann der Zentrierstift aktiv in das Gehäuse gezogen werden.

Die zweite Variante kommt bei Bauteilen zum Einsatz, bei denen das Blech nicht von dem Zentrierstift abgenommen werden kann. Aus diesem Grund wird der Zentrierstift eingefahren und damit aus der Öffnung des Bleches herausgezogen. Auf diese Variante ist die Erfindung gerichtet.

Aus dem Stand der Technik ist ferner das Widerstandschweißen von Bolzen bekannt. Dabei wird eine Schweißelektrode eingesetzt, die einen Hohlraum und einen Zugang in Form einer Öffnung für den Bolzen bereitstellt. Ein typischer Bolzen verfügt dabei über einen Kopf und einen Stift. Der Kopf dient zur Auflage auf dem Blech. Er wird mit dem Blech verschweißt. Der Stift kann glatt ausgebildet sein oder über ein Außengewinde oder ein Innengewinde verfügen.

Zum Verschweißen des Bolzens mit dem Blech wird das Blech auf die Unterelektrode aufgelegt. Der Bolzen wird mit seinem Stift durch eine Bohrung des Bleches gesteckt und teilweise in der Schweißelektrode aufgenommen. Anschließend drückt eine Oberelektrode den Bolzen weiter in die Schweißelektrode hinein, bis der Kopf des Bolzens zur Auflage auf dem Blech gelangt. Dabei wird eine elektrische Verbindung zwischen der Oberelektrode, dem Bolzen, dem Blech und der Unterelektrode hergestellt. Aufgrund des Spannungsabfalls zwischen dem Bolzenkopf und dem Blech entsteht eine starke Wärmeentwicklung, die das Verschweißen des Bolzens mit dem Blech bewirkt.

Das Widerstandsschweißen hat sich insbesondere in der Automobilindustrie, aber auch in anderen Industriezweigen, grundsätzlich bewährt.

Der Erfindung liegt die **Aufgabe** zugrunde, die bekannte Schweißelektrode dahingehend weiterzuentwickeln, dass sie vielseitiger einsetzbar ist.

Zur **Lösung** dieser Aufgabe ist die eingangs genannte Schweißelektrode erfindungsgemäß gekennzeichnet durch eine Überwurfmutter, die in Gewindeeingriff mit dem Gehäuse steht und die Unterelektrode gegen das Gehäuse sichert.

Die erfindungsgemäße Schweißelektrode weist gegenüber herkömmlichen Lösungen den Vorteil auf, dass sie in der Lage ist, sowohl Buckelmuttern als auch Bolzen zu verschweißen. Dies wird dadurch ermöglicht, dass die Unterelektrode austauschbar ist. Bei einem Umrüsten beispielsweise von einem Buckelmutterschweißen mittels Zentrierstiften auf ein Bolzenschweißen, bei dem die Bolzen die Unterelektrode durchdringen, wird lediglich die Überwurfmutter von dem Gehäuse abgeschraubt und die Unterelektrode ausgewechselt. Mit einer Art von Gehäuse ist es also möglich, unterschiedliche Schweißverfahren zu realisieren.

Grundsätzlich, aber nicht erfindungsgemäß, ist es möglich, dass die Überwurfmutter als Unterelektrode dient. Erfindungsgemäß ragt die Unterelektrode über die Überwurfmutter hinaus weiter durchgreift die Unterelektrode die Überwurfmutter. Damit kommt nur die Unterelektrode mit dem Werkstück (z.B. einem Blech) in Kontakt. An dieser Stelle sei darauf hingewiesen, dass die Unterelektrode einer besonderen Beanspruchung im Betrieb unterliegt. Die Beanspruchung setzt sich zusammen aus einer mechanischen Belastung, indem das Werkstück (z.B. das Blech) auf die Unterelektrode platziert wird, und einer thermischen Belastung, da bei dem Schweißvorgang hohe Temperaturen auftreten. Hinzu kommt, dass während des Schweißvorganges Schweißspritzer und Zunder auftreten, die zusätzlich verschleißfördernd auf die Oberfläche der Unterelektrode einwirken. Die Unterelektrode wird daher auch Wechselelektrode genannt. Sie kann im Rahmen der Erfindung einfach ausgetauscht werden. Ein Austausch der Überwurfmutter ist nicht oder zumindest nicht in denselben Intervallen wie die Wechselelektrode erforderlich.

Sowohl bei der Verschweißung von Bolzen als auch bei der Verschweißung von Buckelmuttern ist eine genaue Zentrierung des Zentrierstiftes (Buckelmutter) und des Bolzens wichtig, damit die Mutter und der Bolzen nach der Verschweißung korrekt platziert sind. Hierfür ist es erforderlich, dass auch die Unterelektrode korrekt ausgerichtet ist. Vor diesem Hintergrund wird es als vorteilhaft angesehen, wenn sich die Unterelektrode mit einer Schulter an der Innenseite des Gehäuses abstützt. Vorzugsweise ist die Schulter umlaufend ausgebildet.

Erfindungsgemäß weist die Unterelektrode einen zumindest teilweise umlaufenden Flansch auf, den die Überwurfmutter zur Sicherung gegen das Gehäuse übergreift. Eine derartige Konstruktion ist stabil und kann bevorzugt als Drehteil ausgebildet werden.

Aus dem Stand der Technik sind Unterelektroden bekannt, die mit einem Außengewinde unmittelbar in das Gehäuse eingeschraubt werden. Derartige Unterelektroden sind vergleichsweise aufwendig. In Abkehr der bekannten Konstruktion ist in Weiterbildung der Erfindung vorgesehen, dass das Gehäuse ein Außengewinde aufweist, auf das die Überwurfmutter mit einem Innengewinde aufgeschraubt ist. Die Überwurfmutter lässt sich einfach auf das Gehäuse aufschrauben. Hierbei klemmt sie vorteilhaft die Unterelektrode zwischen sich und dem Gehäuse ein. Dies schafft eine besonders stabile Konstruktion, die darüber hinaus auch platzsparend ist, da der Innenraum des Gehäuses, der im Stand der Technik das Gewinde bereitstellt, bei der Weiterbildung anderweitig genutzt werden kann, wie es im Folgenden noch näher ausgeführt wird.

Die erfindungsgemäße Schweißvorrichtung schafft die Möglichkeit eines modularen Einsatzes. Darüber hinaus ermöglicht es die Erfindung, dass die Unterelektrode als Wechselelektrode ausgetauscht werden kann. In diesem Zusammenhang hat es sich als vorteilhaft erwiesen, dass die Überwurfmutter einen gerändelten Umfang und vorzugsweise zusätzlich mindestens einen Vorsprung zum Eingriff eines Hakenschlüssels aufweist, der eine unidirektionale Betätigung der Überwurfmutter gestattet. Der gerändelte Umfang dient zur manuellen Betätigung der Überwurfmutter. Hier bedarf es lediglich einer manuellen Drehung, um die erforderliche Betriebssicherheit zu gewährleisten. Für den Fall, dass während des Betriebs Verspannungen auftreten, weist die Überwurfmutter vorzugsweise mindestens einen Vorsprung auf, der eine Betätigung mindestens und vorteilhaft ausschließlich in Öffnungsrichtung der Überwurfmutter gestattet.

Eine vorteilhafte Ausführungsform der Erfindung ist gekennzeichnet durch einen Kolbenstangenaufsatz, der vorzugsweise stirnseitig an der Kolbenstange angeordnet ist. Der Kolbenstangenaufsatz ermöglicht die Abstützung eines Bolzens (Bolzenschweißen) oder die Aufnahme eines Zentrierstiftes (Buckelmutterschweißen). In diesem Zusammenhang wird es als besonders vorteilhaft angesehen, wenn der Kolbenstangenaufsatz mit der Kolbenstange lösbar verbunden, insbesondere verschraubt ist. Er ist also austauschbar, was besonders vorteilhaft ist im Falle eines Verschleißes des Kolbenstangenaufsatzes oder bei einer individuellen Anpassung der Schweißelektrode. Sofern ein Zentrierstift zum Einsatz kommen soll, wird man einen Kolbenstangenaufsatz vorsehen, der den Zentrierstift aufnimmt. Für das Bolzenschweißen wird man einen Kolbenstangenaufsatz vorsehen, der den Bolzen abstützt.

In Weiterbildung der Erfindung wird vorgeschlagen, dass der Kolbenstangenaufsatz aus einem isolierenden Material besteht oder einen isolierenden Einsatz aufweist. Ein derartiger Kolbenstangenaufsatz ist besonders gut für das Bolzenschweißen geeignet. Das elektrisch isolierende Material vermeidet einen ungewollten Stromfluss. Sofern der Kolbenstangenaufsatz aus einem keramischen Material besteht, wie es als vorteilhaft angesehen wird, weist er neben seiner isolierenden Eigenschaft auch eine hohe Verschleißfestigkeit auf. Zur Materialersparnis kann der Kolbenstangenaufsatz aus Metall ausgebildet sein und lediglich einen isolierenden Einsatz aufweisen, der vorzugsweise aus einem keramischen Material besteht.

Die Kolbenstange ist in dem Gehäuse verschieblich gelagert. Dies ermöglicht sowohl eine Bolzen- als auch eine Buckelmutter-Verschweißung. Aufgrund der Lösbarkeit des Kolbenstangenaufsatzes ist die erfindungsgemäße Schweißelektrode individuell an den jeweiligen Schweißvorgang anpassbar und kann insoweit auch umgerüstet werden. Zur Erleichterung der Montage und Demontage des Kolbenstangenaufsatzes weist die Kolbenstange vorteilhafterweise ein Profil zum Eingriff eines Schraubenschlüssels auf. Hierdurch kann die Kolbenstange fixiert werden, so dass der Kolbenstangenaufsatz leicht fixiert oder gelöst, insbesondere auf- oder abgeschraubt werden kann. Eine derartige Konstruktion gewährleistet auch den Schutz der übrigen - teilweise empfindlichen - Komponenten der Schweißelektrode.

Eine Weiterbildung der Erfindung ist dadurch gekennzeichnet, dass das Gehäuse eine Oberseite aufweist und dass das Profil der Kolbenstange derart am Ende der Kolbenstange angeordnet ist, dass es in einer Endstellung der Kolbenstange über die Oberseite hinausragt. Eine derartige Konstruktion gestattet bei abgenommener Wechselelektrode einen freien Zugang zu der Kolbenstange, so dass der Kolbenstangenaufsatz problemlos abgenommen oder aufgesetzt werden kann.

Neben der Modularität der erfindungsgemäßen Schweißelektrode ist auch deren funktionssichere Betrieb ausschlaggebend. In diesem Zusammenhang hat es sich als vorteilhaft herausgestellt, dass in dem Gehäuse eine mehrstufige Dichtungsaufnahme angeordnet ist, die sich in Richtung auf die Überwurfmutter hin verjüngt. Die mehrstufige Dichtungsaufnahme dient zur Aufnahme einer Dichtung, die sich an einem oberen Anschlag abstützt. In einer anschließenden Stufe sitzt ein Gleitlager, in dem die Kolbenstange geführt ist. Durch die gesonderte Stufe kann das Gleitlager die Dichtung nicht oder nur zu einem vorbestimmten Grad zusammendrücken. Hierdurch wird die Dichtung im Betrieb geschont und ihre Lebensdauer und Funktionssicherheit deutlich gegenüber bekannten Lösungen erhöht.

Ebenfalls vorteilhaft in Hinblick auf die Funktionssicherheit ist es, wenn in dem Gehäuse eine Dichtung und ein Gleitlager aufgenommen ist, in dem die Kolbenstange geführt ist und die mittels eines Sprengringes in dem Gehäuse gesichert sind. Der Sprengring schließt vorteilhafterweise die breiteste Stufe der Dichtungsaufnahme ab, in der vorzugsweise das Gleitlager aufgenommen ist.

Die erfindungsgemäße Überwurfmutter ist an einem Ende des Gehäuses angeordnet. Vorzugsweise ist das Gehäuse auf seiner der Überwurfmutter abgewandten Seite mit einer Anschlussplatte verschlossen, die lösbar mit dem Gehäuse verbunden ist. Eine derartige Konstruktion macht die Schweißelektrode noch vielseitiger einsetzbar. Denn durch die Anschlussplatte kann die Schweißelektrode an ihre Umgebung angepasst werden. Darüber hinaus schafft die Anschlussplatte eine Inspektionsöffnung zum Inneren des Gehäuses. Dies gilt insbesondere dann, wenn sie den Kolbenraum, in dem die Kolbenstange geführt ist, endseitig verschließt.

Zweckmäßig weist die Anschlussplatte einen Druckluftanschluss auf, der vorzugsweise in die Anschlussplatte eingeschraubt ist. Eine derartige Konstruktion ist kompakt und gestattet vorteilhaft die Einbringung von Luft in das Gehäuse.

Wie bereits eingangs erwähnt, ermöglicht die Erfindung sowohl die Verschweißung von Buckelmuttern als auch die von Bolzen. Für die Verschweißung von Bolzen hat sich als besonders vorteilhaft erwiesen, dass in der Unterelektrode eine Isolierhülse zur Aufnahme eines Bolzens angeordnet ist, die vorzugsweise aus einem keramischen Werkstoff besteht. Die Isolierhülse zentriert den jeweiligen zu verschweißenden Bolzen. Zusätzlich stellt sie eine isolierte Führung zur Verfügung, die vermeidet, dass der Bolzen an ungeeigneten Stellen in Kontakt mit der Unterelektrode kommt. Das keramische Material ist darüber hinaus verschleißfest. Die Hülse kann mehrteilig ausgebildet sein und insbesondere aus zwei oder mehr Hülsenschalen bestehen.

Vorzugsweise ist die Isolierhülse lösbar in der Unterelektrode aufgenommen. Hierdurch ist sie auswechselbar, beispielsweise bei Erreichen einer Verschleißgrenze. Insbesondere kann die Isolierhülse mit einem Sprengring in der Unterelektrode gehalten sein. Diese Maßnahme erleichtert ihre Auswechselung.

In Weiterbildung der Erfindung wird vorgeschlagen, dass die Isolierhülse einen ersten Innendurchmesser aufweist und dass die Überwurfmutter eine Öffnung zum Einstecken des Bolzens aufweist, deren Innendurchmesser größer ist als der erste Innendurchmesser. Auch diese Maßnahme stellt sicher, dass der (metallische) Bolzen ausschließlich in der Isolierhülse geführt wird und insbesondere nicht bereits bei seinem Einstecken in die Überwurfmutter mit dieser in Kontakt kommt.

Die Kolbenstange dient dazu, einen Zentrierstift in das Gehäuse zu ziehen, damit das Blech abgenommen werden kann. Sie dient alternativ dazu, einen zu verschweißenden Bolzen abzustützen, während der Bolzen gegen die Kraft der Kolbenstange in das Gehäuse gedrückt wird. Zur Steuerung der Kolbenstange ist vorteilhaft vorgesehen, dass sie einen Kolben aufweist, der in einem Zylinderabschnitt des Gehäuses geführt ist und einen ersten Raum von einem zweiten Raum trennt. Beide Räume können vorteilhaft mit Druckluft beaufschlagt werden. Bei der Verschweißung von Bolzen wird man lediglich den zweiten (unteren) Raum mit Druckluft beaufschlagen.

Auch der Kolben sollte nach Möglichkeit zugänglich und beispielsweise zu Wartungszecken montier- und demontierbar sein. In diesem Zusammenhang wird es als vorteilhaft angesehen, wenn der Kolben mittels einer Sicherungsschraube an der Kolbenstange fixiert ist.

Vorstehend wurde bereits angedeutet, dass beim Bolzenschweißen vorzugsweise lediglich der zweite Raum mit Druckluft beaufschlagt wird. Vorteilhafterweise ist in das Gehäuse eine Drossel eingeschraubt, über die aus dem ersten Raum entweichende Luft gedrosselt werden kann. Die Drossel gestattet eine Einstellung der entweichenden und einströmenden Luft und dient damit zur Einstellung des Stellverhaltens der Kolbenstange. Durch die Einschraubbarkeit der Drossel kann diese durch einen Druckluftanschluss ausgetauscht werden, der für die Verschweißung von Buckelmuttern erforderlich ist.

Zur Schonung der innenliegenden Komponenten wie Dichtung, Gleitlager und Kolben ist es vorteilhaft, wenn die Drossel einen Filter, insbesondere einen Ringfilter, aufweist. Hierdurch wird die in das Gehäuse eingelassene Luft gereinigt und die Komponenten entsprechend geschont, was einen positiven Einfluss auf die Lebensdauer der erfindungsgemäßen Schweißelektrode hat.

Im Folgenden wird die Erfindung anhand von Ausführungsbeispielen näher im Zusammenhang mit der anhängenden **Zeichnung** erläutert. Die Zeichnung zeigt in:
- Figur 1: in einer Seitenansicht ein erstes erfindungsgemäßes Ausführungsbeispiel;
- Figur 2: eine Schnittansicht des ersten Ausführungsbeispiels entlang der Linie A-A in Figur 1;
- Figur 3: in einer Seitenansicht ein zweites erfindungsgemäßes Ausführungsbeispiel; und
- Figur 4: eine Schnittansicht des zweiten Ausführungsbeispiels entlang der Linie A-A in Figur 3.

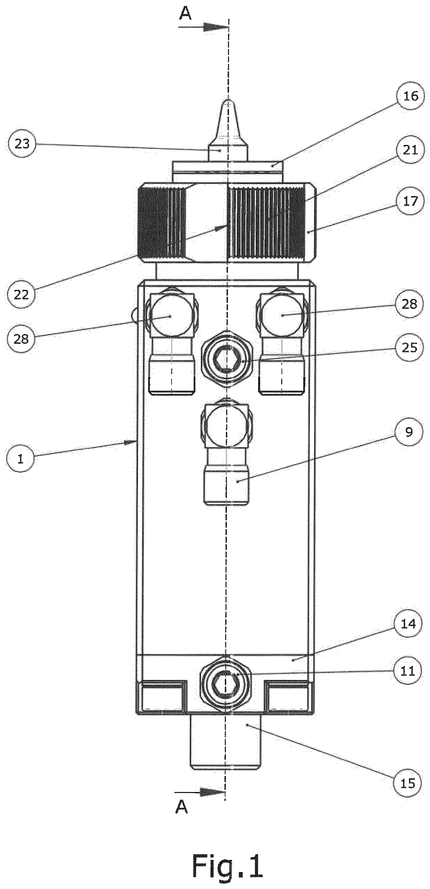

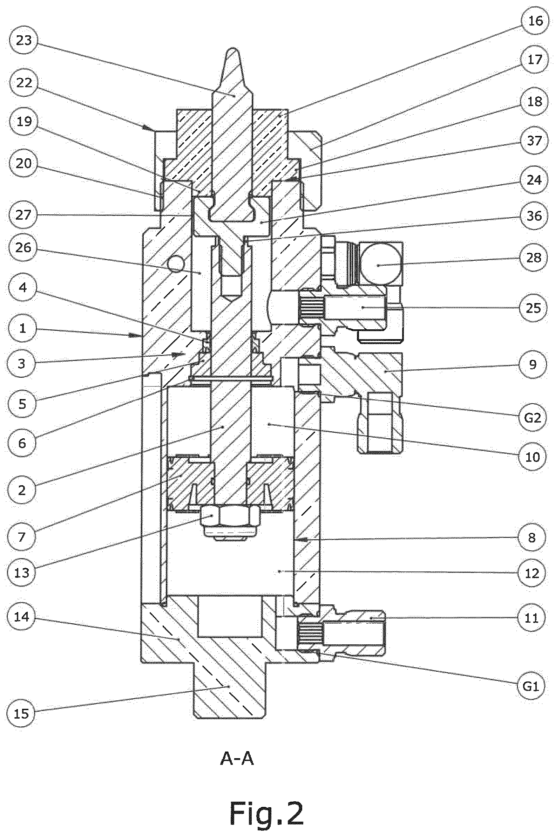

Im Folgenden wird auf die Figuren 1 und 2 Bezug genommen, die ein erstes Ausführungsbeispiel der erfindungsgemäßen Schweißelektrode zeigen. Die Schweißelektrode weist ein Gehäuse 1 auf. In dem Gehäuse 1 ist eine Kolbenstange 2 beweglich gelagert. Hierzu weist das Gehäuse eine mehrstufige Dichtungsaufnahme 3 auf, in der eine Dichtung 4 und ein Gleitlager 5 aufgenommen sind. Ein Sprengring 6 sichert das Gleitlager 5 in der Dichtungsaufnahme 3. Die Dichtungsaufnahme 3 verjüngt sich. Die Mehrstufigkeit sorgt dafür, dass das Gleitlager 5 die Dichtung 4 nicht oder nur mit einer bestimmten Vorspannung kontaktiert. Hierdurch wird die Dichtung 4 geschont.

An einem Ende der Kolbenstange 2 ist ein Kolben 7 angeordnet, der in einem Zylinderabschnitt 8 des Gehäuses 1 geführt ist. Über einen ersten Druckluftanschluss 9 kann Druckluft in einen ersten Raum 10 des Zylinderabschnitts 8 eingeleitet werden. Durch einen zweiten Druckluftanschluss 11 kann Druckluft in einen zweiten Raum 12 des Zylinderabschnitts 8 eingelassen werden. Der erste Druckluftanschluss 9 und der zweite Druckluftanschluss 11 sind in das Gehäuse 1 eingeschraubt. Hierzu weist das Gehäuse jeweils Gewinde G1, G2 auf.

Der Kolben 7 ist mittels einer Mutter 13 an der Kolbenstange 2 gesichert.

Mit dem Bezugszeichen 14 ist eine Anschlussplatte gekennzeichnet. Die Anschlussplatte 14 ist lösbar mit dem Zylinderabschnitt 8 verbunden, und zwar vorzugsweise mittels Schrauben, die durch die Anschlussplatte 14 in den Zylinderabschnitt eingeschraubt sind. Durch die Abnehmbarkeit der Anschlussplatte 14 ist der Zylinderabschnitt 8 z.B. für Inspektionszwecke zugänglich. Insbesondere kann der Kolben inspiziert und ggf. ausgetauscht werden. Darüber hinaus kann die erfindungsgemäße Schweißvorrichtung durch eine geeignete Wahl der Austauschplatte 14 an unterschiedliche maschinelle Umgebungen angepasst werden. Beispielsweise kann der Zapfen 15 der Anschlussplatte 14 als Gewinde oder, wie gezeigt, als gewindeloser Zapfen ausgebildet sein. Auch zapfenlose Anschlussplatten 14 sind denkbar. Dann weist die Anschlussplatte 14 z.B. Bohrungen für Befestigungsschrauben auf. Eine kompakte Konstruktion wird dadurch geschaffen, dass das Gewinde G1 in der Anschlussplatte 14 ausgebildet ist.

An seiner der Anschlussplatte 14 abgewandten Seite weist das Gehäuse eine Unterelektrode 16 auf, die mit einer Überwurfmutter 17 an dem Gehäuse 1 fixiert werden kann. Vorzugsweise weist die Unterelektrode 16 einen zweckmäßig umlaufenden Flansch 18 auf, der von der Überwurfmutter übergriffen wird. Die Unterelektrode stützt sich mit einer Schulter 19 an der Innenseite des Gehäuses 1 ab. Die Überwurfmutter 17 ist auf ein Außengewinde 20 des Gehäuses aufgeschraubt und schafft dadurch eine haltbare Befestigung der Unterelektrode 16 an dem Gehäuse 1.

Die Überwurfmutter 17 kann manuell an dem Gehäuse 1 festgelegt werden. Hierzu weist sie eine Rändelung 21 auf. Das Abschrauben erfolgt in aller Regel ebenfalls manuell. Sofern sich die Überwurfmutter 17 im Betrieb verspannt haben sollte, weist sie einen Vorsprung 22 für einen Hakenschlüssel auf, mit dem sich die Überwurfmutter unidirektional, also nur in Öffnungsrichtung, bewegen lässt.

Das erste Ausführungsbeispiel dient zur Verschweißung von Buckelmuttern auf einem Werkstück, zum Beispiel einem Blech. Hierzu ist in der Unterelektrode ein Zentrierstift 23 verschieblich geführt, der in einem Kolbenstangenaufsatz 24 aufgenommen ist. Der Kolbenstangenaufsatz 24 ist mit der Kolbenstange 2 verschraubt. Dies gestattet es, dass auch andere Kolbenstangenaufsätze mit der Kolbenstange 2 verbunden werden können, wie es im Zusammenhang mit dem zweiten Ausführungsbeispiel noch näher erläutert wird.

Buckelmutterschweißen an sich ist bekannt. Das (hier nicht gezeigte) Blech wird mit einer Öffnung auf den Zentrierstift 23 platziert. Sodann wird auf dem Zentrierstift 23 die Buckelmutter aufgenommen. Von oben wird eine Oberelektrode auf die Buckelmutter herabgesenkt, die die Buckelmutter auf das Blech drückt. Sobald die Buckelmutter das Blech berührt, fließt ein Strom und die Buckelmutter verschweißt mit dem Blech. Die Verschweißung kann auch in einer seitlichen Ausrichtung der Schweißelektrode erfolgen.

Über die Kolbenstange 2 ist der Zentrierstift aktiv in das Gehäuse ziehbar. Hierzu wird durch den ersten Druckluftanschluss 9 Druckluft in den ersten Raum 10 geleitet. Der Kolben 7 bewegt sich mit der Kolbenstange 2 in Richtung der Anschlussplatte 14. Hierdurch wird der Zentrierstift 23 in die Unterelektrode 16 eingezogen. Die Dichtung 4 sorgt dafür, dass die Druckluft nicht entweicht. Zum Ausfahren des Zentrierstiftes 23 wird Druckluft durch den zweiten Druckluftanschluss 11 in den zweiten Raum 12 gelassen.

Über einen dritten Druckluftanschluss 25 wird Reinigungsluft in einen dritten Raum 26 eingelassen. Die Reinigungsluft kann durch einen Spalt 27 zwischen dem Kolbenstangenaufsatz 24 und dem Gehäuse 1 entweichen und tritt durch die Unterelektrode 16 aus dem Gehäuse 1 aus. Die Reinigungsluft sorgt dafür, dass während des Schweißvorganges Schweißspritzer und andere Verunreinigungen von der Schweißstelle (und dem Zentrierstift 23) weggeblasen werden. Über Wasseranschlüsse 28 wird die Schweißelektrode gekühlt.

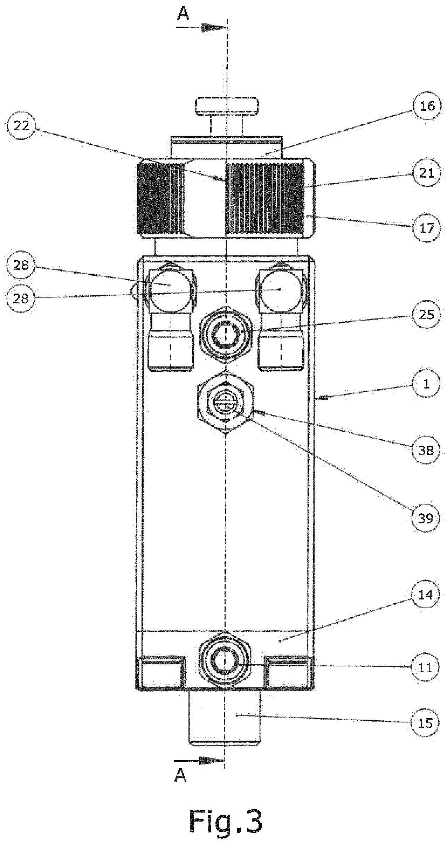

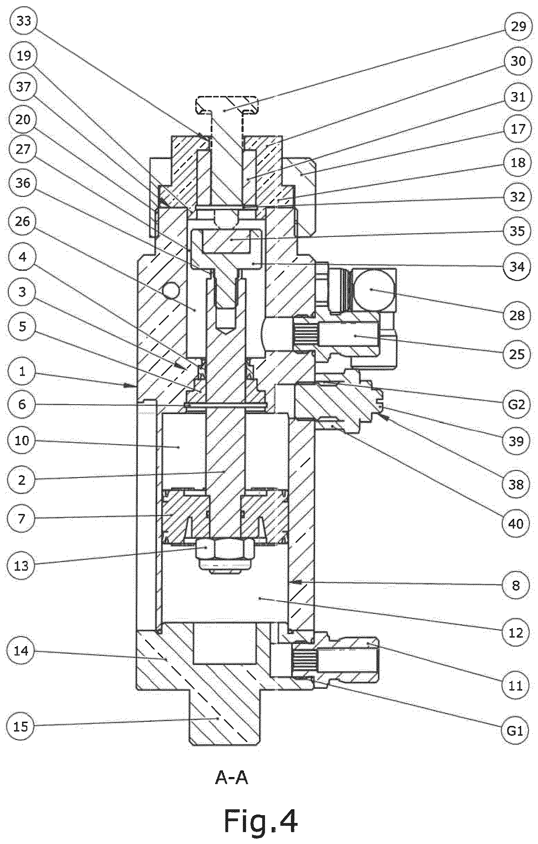

Es wird auf die Figuren 3 und 4 Bezug genommen, die ein zweites Ausführungsbeispiel der erfindungsgemäßen Schweißelektrode zeigen. Aus Gründen der besseren Übersichtlichkeit werden identische oder ähnliche Teile mit denselben Bezugsziffern wie bei dem ersten Ausführungsbeispiel gekennzeichnet, auch wenn sie baulich etwas voneinander abweichen.

Das zweite Ausführungsbeispiel betrifft eine Schweißelektrode zum Schweißen von Bolzen. Ein derartiger Bolzen 29 ist strichliniert angedeutet und kann z.B. ein Gewinde umfassen oder glatt ausgebildet sein.

Der Bolzen 29 kann in eine Unterelektrode 30 eingesteckt werden. Im Gegensatz zu der Unterelektrode 16 des ersten Ausführungsbeispiels ist vorliegend in die Unterelektrode 30 eine Isolierhülse 31 eingesteckt, die mit einem Sprengring 32 in der Unterelektrode 30 gesichert ist. Dadurch wird verhindert, dass der - aus Metall bestehende - Bolzen 29 in Kontakt mit der Unterelektrode 30 kommt. Der Innendurchmesser der vorzugsweise aus Keramik bestehenden Isolierhülse 31 ist kleiner als der Innendurchmesser der Öffnung 33 (der Überwurfmutter 17), in die der Bolzen gesteckt wird.

Der Bolzen 29 stützt sich an einem Kolbenstangeaufsatz 34 ab, die mit der Kolbenstange 2 in Gewindeeingriff steht und einen isolierenden Einsatz 35 aufweist, auf dem sich der Bolzen 29 abstützt. Alternativ kann der Kolbenstangenaufsatz 34 auch gänzlich aus einem isolierenden Material bestehen, beispielsweise aus Keramik, welches hervorragende Verschleißeigenschaften aufweist.

Zur Montage und Demontage des Kolbenstangenaufsatzes 34 weist - wie auch das erste Ausführungsbeispiel - die Kolbenstange 2 ein Profil 36 auf, mittels dessen die Kolbenstange während der Montage oder Demontage gehalten werden kann. Hierdurch werden die empfindlichen Komponenten, wie Dichtungen, Führungen und Kolben, geschont. Das Profil 36 ist vorzugsweise aus dem Gehäuse 1 der Schweißelektrode bewegbar, so dass es frei zugänglich ist. Die Länge der Kolbenstange 2 ist also so groß, dass das Profil 36 in einer (bei aufrechter Schweißelektrode) oberen Anschlagposition über eine Oberseite 37 des Gehäuses hinausragt, sofern die Unterelektrode 30 abgenommen ist.

Dieser Gesichtspunkt gilt auch für das erste Ausführungsbeispiel. Im Betrieb bildet (wie auch bei dem ersten Ausführungsbeispiel) die Schulter 19 einen Anschlag für den Kolbenstangenaufsatz 33.

Zum Verschweißen des Bolzens 29 mit einem (nicht gezeigten) Blech wird das Blech auf der Unterelektrode 30 platziert, so dass die Öffnung des Bleches, durch das der Bolzen 29 hindurchgreifen soll, mit der Öffnung 33 der Unterelektrode 30 fluchtet. Sodann wird der Bolzen 29 mittels einer (ebenfalls nicht dargestellten) Oberelektrode gegen die Gegenkraft der Kolbenstange 2 in die Unterelektrode 30 gedrückt, bis er zur Auflage auf dem Blech kommt, wo er aufgrund des Stromflusses mit dem Blech verschweißt. Die Gegenkraft wird dabei durch einen Überdruck in dem zweiten Raum 12 gebildet, der durch den Druckluftanschluss 11 mit Druckluft versorgt wird. Nach Entnahme des Bolzens 29 und des Bleches gelangt der Kolbenstangenaufsatz 34 wieder in seine obere Anschlagsposition, in der an der Unterelektrode 30 anliegt. Hierbei entweicht Luft aus dem ersten Raum 10 durch eine Drossel 38, die mittels einer Schraube 39 einstellbar ist. Da bei einer Bewegung des Kolbens 7 nach unten, also von der Unterelektrode 30 weg, Luft in den ersten Raum 12 eingesogen wird, ist vorteilhaft ein Filter 40 vorgesehen, der vermeidet, dass Fremdkörper in den ersten Raum 12 gelangen. Im Übrigen wird auf die Beschreibung des ersten Ausführungsbeispiels verwiesen.

### Bezugszeichenliste

- 1: Gehäuse
- 2: Kolbenstange
- 3: Dichtungsaufnahme
- 4: Dichtung
- 5: Gleitlager
- 6: Sprengring
- 7: Kolben
- 8: Zylinderabschnitt
- 9: Druckluftanschluss
- 10: erster Raum
- 11: Druckluftanschluss
- 12: zweiter Raum
- 13: Mutter
- 14: Anschlussplatte
- 15: Zapfen
- 16: Unterelektrode
- 17: Überwurfmutter
- 18: Flansch
- 19: Schulter
- 20: Außengewinde
- 21: Rändelung
- 22: Vorsprung
- 23: Zentrierstift
- 24: Kolbenstangenaufsatz
- 25: Druckluftanschluss
- 26: dritter Raum
- 27: Spalt
- 28: Wasseranschluss
- 29: Bolzen
- 30: Unterelektrode
- 31: Isolierhülse
- 32: Sprengring
- 33: Öffnung
- 34: Kolbenstangenaufsatz
- 35: Einsatz
- 36: Profil
- 37: Oberseite
- 38: Drossel
- 39: Schraube
- 40: Filter

- G1: Gewinde
- G2: Gewinde

## Patentansprüche

1. Schweißelektrode, mit
- einem Gehäuse (1),
- einer in dem Gehäuse (1) angeordneten Kolbenstange (2), die in Achsrichtung längsverschieblich gelagert ist, und mit
- einer Unterelektrode (16; 30), die sich an dem Gehäuse (1) abstützt,
**gekennzeichnet durch**
- eine Überwurfmutter (17), die in Gewindeeingriff mit dem Gehäuse (1) steht und die Unterelektrode (16; 30) gegen das Gehäuse sichert,
- wobei die Unterelektrode (16; 30) über die Überwurfmutter (17) hinausragt, und
- wobei die Unterelektrode (16; 30) einen zumindest teilweise umlaufenden Flansch (18) aufweist, den die Überwurfmutter (17) zur Sicherung gegen das Gehäuse (1) übergreift.

2. Schweißelektrode nach Anspruch 1, **dadurch gekennzeichnet, dass** sich die Unterelektrode (16; 30) mit einer Schulter (19) an der Innenseite des Gehäuses (1) abstützt.

3. Schweißelektrode nach Anspruch 1 oder 2, **dadurch gekennzeichnet, dass** das Gehäuse (1) ein Außengewinde (20) aufweist, auf das die Überwurfmutter (17) mit einem Innengewinde aufgeschraubt ist.

4. Schweißelektrode nach einem der Ansprüche 1 bis 3, **dadurch gekennzeichnet, dass** die Überwurfmutter (17) einen gerändelten Umfang und vorzugsweise zusätzlich mindestens einen Vorsprung (22) zum Eingriff eines Hakenschlüssels aufweist, wobei der Vorsprung eine unidirektionale Betätigung der Überwurfmutter (17) gestattet.

5. Schweißelektrode nach einem der Ansprüche 1 bis 4, **gekennzeichnet durch** einen Kolbenstangenaufsatz (24; 34), der vorzugsweise stirnseitig an der Kolbenstange (2) angeordnet ist, wobei vorzugsweise der Kolbenstangenaufsatz (24; 34) mit der Kolbenstange (2) lösbar verbunden, insbesondere verschraubt ist.

6. Schweißelektrode nach Anspruch 5, **dadurch gekennzeichnet, dass** der Kolbenstangenaufsatz (34) aus einem isolierenden Material besteht oder einen isolierenden Einsatz (35) aufweist, der vorzugsweise aus einem keramischen Material besteht.

7. Schweißelektrode nach einem der Ansprüche 1 bis 6, **dadurch gekennzeichnet, dass** die Kolbenstange (2) ein Profil (36) zum Eingriff eines Schraubenschlüssels aufweist.

8. Schweißelektrode nach Anspruch 7, **dadurch gekennzeichnet, dass** das Gehäuse (1) eine Oberseite (37) aufweist und dass das Profil (36) der Kolbenstange (2) derart am Ende der Kolbenstange angeordnet ist, dass es in einer Endstellung der Kolbenstange über die Oberseite (37) hinausragt.

9. Schweißelektrode nach einem der Ansprüche 1 bis 8, **dadurch gekennzeichnet, dass** in dem Gehäuse (1) eine mehrstufige Dichtungsaufnahme (3) angeordnet ist, die sich in Richtung auf die Überwurfmutter (17) hin verjüngt.

10. Schweißelektrode nach einem der Ansprüche 1 bis 9, **dadurch gekennzeichnet, dass** in dem Gehäuse (1) eine Dichtung (4) und ein Gleitlager (5) aufgenommen ist, in dem die Kolbenstange (2) geführt ist und die mittels eines Sprengringes (6) in dem Gehäuse gesichert sind.

11. Schweißelektrode nach einem der Ansprüche 1 bis 10, **dadurch gekennzeichnet, dass** das Gehäuse (1) auf seiner der Überwurfmutter (17) abgewandten Seite mit einer Anschlussplatte (14) verschlossen ist, die lösbar mit dem Gehäuse verbunden ist, wobei vorzugsweise die Anschlussplatte (14) einen Druckluftanschluss (11) aufweist, der vorzugsweise in die Anschlussplatte eingeschraubt ist.

12. Schweißelektrode nach einem der Ansprüche 1 bis 11, **dadurch gekennzeichnet, dass** in der Unterelektrode (30) eine Isolierhülse (31) zur Aufnahme eines Bolzens (29) angeordnet ist, die vorzugsweise aus einem keramischen Werkstoff besteht, wobei vorzugsweise die Isolierhülse (31) lösbar in der Unterelektrode (30) aufgenommen ist, insbesondere mit einem Sprengring (32) in der Überwurfmutter gehalten ist.

13. Schweißelektrode nach einem der Ansprüche 1 bis 12, **dadurch gekennzeichnet, dass** die Isolierhülse (31) einen ersten Innendurchmesser aufweist und dass die Überwurfmutter (17) eine Öffnung (33) aufweist, deren Innendurchmesser größer ist als der erste Innendurchmesser.

14. Schweißelektrode nach einem der Ansprüche 1 bis 13, **dadurch gekennzeichnet, dass** die Kolbenstange (2) einen Kolben (7) aufweist, der in einem Zylinderabschnitt (8) des Gehäuses (1) geführt ist und einen ersten Raum (10) von einem zweiten Raum (12) trennt, wobei vorzugsweise der Kolben (7) mittels einer Sicherungsschraube (13) an der Kolbenstange (2) fixiert ist.

15. Schweißelektrode nach Anspruch 14, **dadurch gekennzeichnet, dass** in das Gehäuse eine Drossel (38) eingeschraubt ist, über die aus dem ersten Raum (10) entweichende Luft gedrosselt werden kann, wobei vorzugsweise die Drossel (38) einen Filter (40), insbesondere einen Ringfilter, aufweist.

## Claims

1. Welding electrode, with
- a housing (1),
- a piston rod (2) which is arranged in the housing (1) and is mounted longitudinally displaceably in the axial direction, and with
- a lower electrode (16; 30) which is supported on the housing (1),
**characterized by**
- a union nut (17) which is in threaded engagement with the housing (1) and secures the lower electrode (16; 30) against the housing,
- wherein the lower electrode (16; 30) extends beyond the union nut (17), and
- wherein the lower electrode (16; 30) has an at least partially peripheral flange (18), over which the union nut (17) engages for securing against the housing (1).

2. Welding electrode according to Claim 1, **characterized in that** the lower electrode (16; 30) is supported with a shoulder (19) on the inner side of the housing (1).

3. Welding electrode according to Claim 1 or 2, **characterized in that** the housing (1) has an external thread (20), onto which the union nut (17) is screwed with an internal thread.

4. Welding electrode according to any one of Claims 1 to 3, **characterized in that** the union nut (17) has a knurled periphery and preferably additionally at least one projection (22) for engaging a hook spanner, wherein the projection allows a unidirectional actuation of the union nut (17).

5. Welding electrode according to any one of Claims 1 to 4, **characterized by** a piston rod attachment (24; 34) which is preferably arranged on the front side of the piston rod (2), wherein the piston rod attachment (24; 34) is preferably releasably connected, in particular bolted, to the piston rod (2).

6. Welding electrode according to Claim 5, **characterized in that** the piston rod attachment (34) consists of an insulating material or has an insulating insert (35) which preferably consists of a ceramic material.

7. Welding electrode according to any one of Claims 1 to 6, **characterized in that** the piston rod (2) has a profile (36) for engaging a spanner.

8. Welding electrode according to Claim 7, **characterized in that** the housing (1) has an upper side (37), and **in that** the profile (36) of the piston rod (2) is arranged at the end of the piston rod in such a way that it protrudes beyond the upper side (37) in an end position of the piston rod.

9. Welding electrode according to any one of Claims 1 to 8, **characterized in that** a multi-step seal receptacle (3) which tapers in the direction of the union nut (17) is arranged in the housing (1).

10. Welding electrode according to any one of Claims 1 to 9, **characterized in that** a seal (4) and a plain bearing (5), in which the piston rod (2) is guided, are received in the housing (1) and are secured by means of a snap ring (6) in the housing.

11. Welding electrode according to any one of Claims 1 to 10, **characterized in that** the housing (1) is closed on its side facing away from the union nut (17) by way of a connection plate (14) which is releasably connected to the housing, wherein the connection plate (14) preferably has a compressed air connection (11) which is preferably screwed into the connection plate.

12. Welding electrode according to any one of Claims 1 to 11, **characterized in that** an insulating sleeve (31), which preferably consists of a ceramic material, for receiving a bolt (29) is arranged in the lower electrode (30), wherein the insulating sleeve (31) is preferably releasably received in the lower electrode (30), in particular is held by way of a snap ring (32) in the union nut.

13. Welding electrode according to any one of Claims 1 to 12, **characterized in that** the insulating sleeve (31) has a first inner diameter, and **in that** the union nut (17) has an opening (33), the inner diameter of which is greater than the first inner diameter.

14. Welding electrode according to any one of Claims 1 to 13, **characterized in that** the piston rod (2) has a piston (7) which is guided in a cylindrical portion (8) of the housing (1) and separates a first space (10) from a second space (12), wherein preferably the piston (7) is fixed to the piston rod (2) by means of a locking screw (13).

15. Welding electrode according to Claim 14, **characterized in that** a throttle (38) is screwed into the housing, via which throttle air escaping from the first space (10) can be throttled, wherein preferably the throttle (38) has a filter (40), in particular a ring filter.

## Revendications

1. Électrode de soudage, avec
- un boîtier (1),
- une tige de piston (2) agencée dans le boîtier (1), qui est montée de manière à pouvoir se déplacer longitudinalement dans la direction axiale, et avec
- une électrode inférieure (16 ; 30) qui s'appuie sur le boîtier (1),
**caractérisée par**
- un écrou-raccord (17) qui est en prise filetée avec le boîtier (1) et qui immobilise l'électrode inférieure (16 ; 30) contre le boîtier,
- l'électrode inférieure (16 ; 30) dépassant de l'écrou-raccord (17), et
- l'électrode inférieure (16 ; 30) présentant une bride (18) au moins partiellement périphérique, que l'écrou-raccord (17) recouvre pour l'immobiliser contre le boîtier (1).

2. Électrode de soudage selon la revendication 1, **caractérisée en ce que** l'électrode inférieure (16 ; 30) s'appuie par un épaulement (19) sur le côté intérieur du boîtier (1).

3. Électrode de soudage selon la revendication 1 ou 2, **caractérisée en ce que** le boîtier (1) présente un filetage extérieur (20) sur lequel est vissé l'écrou-raccord (17) par un filetage intérieur.

4. Électrode de soudage selon l'une quelconque des revendications 1 à 3, **caractérisée en ce que** l'écrou-raccord (17) présente une périphérie moletée et de préférence en outre au moins une saillie (22) pour l'engagement d'une clé à ergot, la saillie permettant un actionnement unidirectionnel de l'écrou-raccord (17).

5. Électrode de soudage selon l'une quelconque des revendications 1 à 4, **caractérisée par** un embout de tige de piston (24 ; 34) qui est agencé de préférence à l'extrémité frontale de la tige de piston (2), l'embout de tige de piston (24 ; 34) étant de préférence relié de manière amovible à la tige de piston (2), notamment vissé.

6. Électrode de soudage selon la revendication 5, **caractérisée en ce que** l'embout de tige de piston (34) est constitué d'un matériau isolant ou présente un insert isolant (35) constitué de préférence d'un matériau céramique.

7. Électrode de soudage selon l'une quelconque des revendications 1 à 6, **caractérisée en ce que** la tige de piston (2) présente un profil (36) pour l'engagement d'une clé à écrous.

8. Électrode de soudage selon la revendication 7, **caractérisée en ce que** le boîtier (1) présente un côté supérieur (37) et **en ce que** le profil (36) de la tige de piston (2) est agencé à l'extrémité de la tige de piston de telle sorte qu'il dépasse du côté supérieur (37) dans une position d'extrémité de la tige de piston.

9. Électrode de soudage selon l'une quelconque des revendications 1 à 8, **caractérisée en ce qu'**un logement d'étanchéité à plusieurs niveaux (3) est agencé dans le boîtier (1), lequel se rétrécit en direction de l'écrou-raccord (17).

10. Électrode de soudage selon l'une quelconque des revendications 1 à 9, **caractérisée en ce que** le boîtier (1) contient un joint d'étanchéité (4) et un palier lisse (5) dans lequel la tige de piston (2) est guidée et qui sont immobilisés dans le boîtier au moyen d'une bague élastique (6).

11. Électrode de soudage selon l'une quelconque des revendications 1 à 10, **caractérisée en ce que** le boîtier (1) est fermé, sur son côté détourné de l'écrou-raccord (17), par une plaque de raccordement (14) qui est reliée de manière amovible au boîtier, la plaque de raccordement (14) présentant de préférence un raccord d'air comprimé (11) qui est de préférence vissé dans la plaque de raccordement.

12. Électrode de soudage selon l'une quelconque des revendications 1 à 11, **caractérisée en ce qu'**une douille isolante (31) destinée à recevoir un boulon (29) est agencée dans l'électrode inférieure (30), laquelle douille est de préférence constituée d'un matériau céramique, la douille isolante (31) étant de préférence logée de manière amovible dans l'électrode inférieure (30), notamment maintenue dans l'écrou-raccord à l'aide d'une bague élastique (32).

13. Électrode de soudage selon l'une quelconque des revendications 1 à 12, **caractérisée en ce que** la douille isolante (31) présente un premier diamètre intérieur et **en ce que** l'écrou-raccord (17) présente une ouverture (33) dont le diamètre intérieur est supérieur au premier diamètre intérieur.

14. Électrode de soudage selon l'une quelconque des revendications 1 à 13, **caractérisée en ce que** la tige de piston (2) présente un piston (7) qui est guidé dans une section cylindrique (8) du boîtier (1) et sépare un premier espace (10) d'un deuxième espace (12), le piston étant de préférence (7) est de préférence fixé à la tige de piston (2) au moyen d'une vis d'immobilisation (13).

15. Électrode de soudage selon la revendication 14, **caractérisée en ce qu'**un étranglement (38) est vissé dans le boîtier, par l'intermédiaire duquel l'air s'échappant du premier espace (10) peut être étranglé, l'étranglement (38) présentant de préférence un filtre (40), notamment un filtre annulaire.
